# EUROPEAN PATENT SPECIFICATION

(11) **EP 3 775 598 B1**
(45) Date of publication and mention of the grant of the patent: **21.08.2024**
(21) Application number: 19830251.5
(22) Date of filing: 05.07.2019
(51) Int. Cl.: F16D 65/00

(54) **AUTOMATIC INTERBRAKE PADS DISTANCE ADJUSTER**
AUTOMATISCHE DISTANZJUSTIERUNG FÜR ZWISCHENBREMSBELÄGE
DISPOSITIF DE RÉGLAGE AUTOMATIQUE DE LA DISTANCE DES GARNITURES ENTRE LES FREINS

(30) Priority: 06.07.2018 TR 201809647
(43) Date of publication of application: 17.02.2021
(73) Proprietor: RUMELI MAKINA OTOMOTIV YED. PAR. SAN. VE TIC. LTD. STI., Izmir (TR)
(72) Inventor: BUZCU, Niyazi, Izmir (TR); BUZCU, Sinan, Bornova/Izmir (TR); CANSIZ, Ismail Kürsat, Bornova/Izmir (TR)
(74) Representative: Zaboliene, Reda
(86) International application number: PCT/TR2019/050531
(87) International publication number: WO 2020/009679

(56) References cited:
- CN-A- 105 485 224
- KR-B1- 101 217 096
- KR-B1- 101 217 096
- US-A1- 2017 307 035
- US-A1- 2017 307 035

## Description

### Technical Field

This invention relates to a brake adjustment mechanism in Pneumatic Disk brakes located in calliper and used for adjustment of pre-use distance between brake pads and pressing onto brake disk during braking and thus converting kinetic energy into heat energy, providing slowing down and stop of vehicle and automatically adjusting distance differences arising from wearing in the brake pads during period of use.

### Present State of Art

In pneumatic disk brakes, brake adjustment mechanisms are firstly used for adjustment of distance between brake pads during initial mounting of brake pads. Thickness of brake pads worn during use decreases, which increases the distance between them. Increase of distance between pads causes reduction in brake performance and security weakness.

In the related art the distance between worn pads is manually or automatically adjusted.

Manual adjustment of distance between worn brake pads consists of processes of removal of calliper, demounting, conduct of setting, mounting and re-placement. As parts in heavy vehicles are big and heavy, it not only causes risk in terms of occupational safety but also long time taking.

In the related art distance between worn brake pads can be adjusted automatically. In general mechanisms called brake adjustment mechanisms are used for this operation.

Conduct of brake adjustment is made by means of brake adjustment mechanism placed inside brake adjustment spindle. Flaps located on the brake adjustment mechanism are placed into adjustment spindle and the motion given to brake adjustment mechanism is transferred to the spindle by a set lever. Thus grooves on outer wall of the spindle provides a motion perpendicular to rotation motion spindle. Thus pads located on end of the spindle can be adjusted.

Regarding the second duty of brake adjustment mechanism which is automatic return of pads distance of which is changed due to wearing after use, the related art has following applications.

In the related art this operation is conducted by means of one-way rotating brake pad adjustment mechanisms located inside brake adjustment spindle. When braked, brake pads moves until pressing onto brake disk. In this case, if the pads are worn, brake adjustment mechanism rotates the brake adjustment spindle wherein it is located as it is not able to rotate around itself, and moves it towards pads, and after braking it rotates in opposite direction around its axis that time and leaves the adjustment spindle in adjusted position without moving brake adjustment spindle.

Angle of rotating at its axis of brake adjustment mechanism placed inside brake adjustment spindle is classified by a fixed stop member and clutch ring under patent description numbered 2012/13921.

Under patent description numbered 2012/14271, motion of rotating around its axis of brake adjustment mechanism placed in brake adjustment spindle is provided by ball bearings but opposition motion is prevented by a part called conical clutching and thus setting is provided.

In the file numbered US2017/307035A1, the spring is connected to the guide arm (15) in order to lock the brake adjustment mechanism in one direction, and the said one-way locking is provided by the said spring. Although the technical problem is solved with a wrap spring in the document numbered US2017/307035A1, this use, which is the subject of the invention, both contains more elements and increases friction due to its grooved structure. The increase in friction causes the brake pads to heat up and prolong the braking distance at the next braking moment. In addition, as a result of friction, the elements wear out in a short time and need to be replaced.

### Purpose of the Invention

The following problems are discovered in brake adjustment mechanism in Pneumatic Disk brakes located in calliper and used for adjustment of pre-use distance between brake pads and pressing onto brake disk during braking and thus converting kinetic energy into heat energy, providing slowing down and stop of vehicle and automatically adjusting distance differences arising from wearing in the brake pads during period of use.

Brake adjustment mechanisms consist of many parts and this case causes increase in production cost and also makes production processes difficult.

Increase in number of parts also increases rise in rate of failure and non-matching problems.

This process sometimes reaches temperatures above 300 C degrees from time to time as kinetic energy is converted into heat energy by friction effect and therefore wearing caused by friction may occur, which shortens lives of parts.

Purpose of the invention is to reduce number of parts used in brake adjustment mechanism.

Reduction in number of parts will reduces production cost.

In addition, reduction in number of parts will shorten production period.

Another result aimed to be achieved in brake adjustment mechanism is to provide longer life of use. Conduct of locking operation by use of only ball bearings without need for any conical clutching prevents wearing, which provides longer use life of adjustment mechanism.

### Detailed Description of the Invention

The brake adjustment mechanism developed to achieve the purpose of the invention is shown in the figures attached hereto.

The figures are as follows:

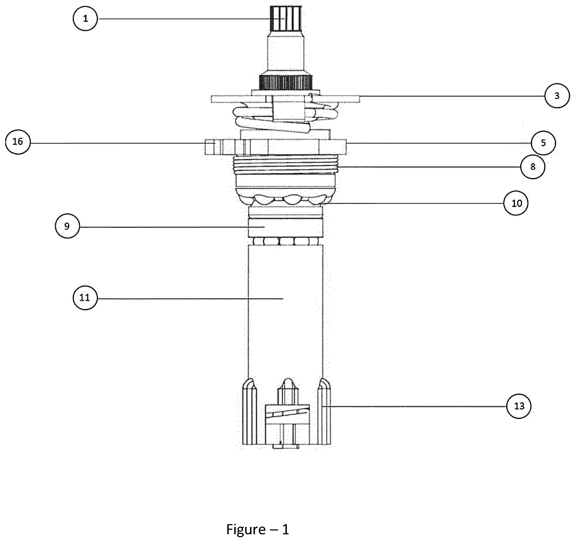

- **Figure 1** -: Brake Adjustment Mechanism
- **Figure 2** -: Demounting view of Brake Adjustment Mechanism

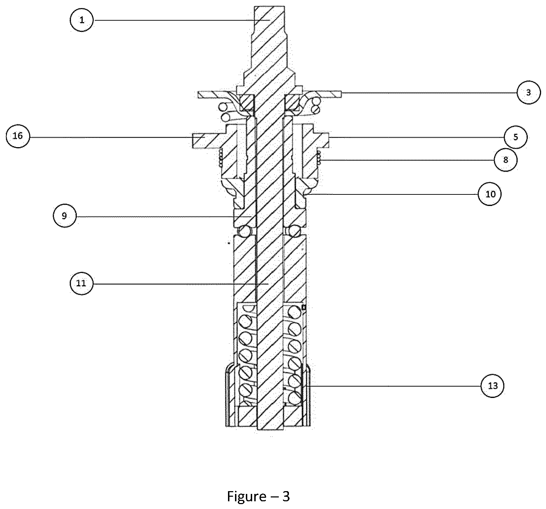

- **Figure 3** -: Cross-section view of Brake Adjustment Mechanism

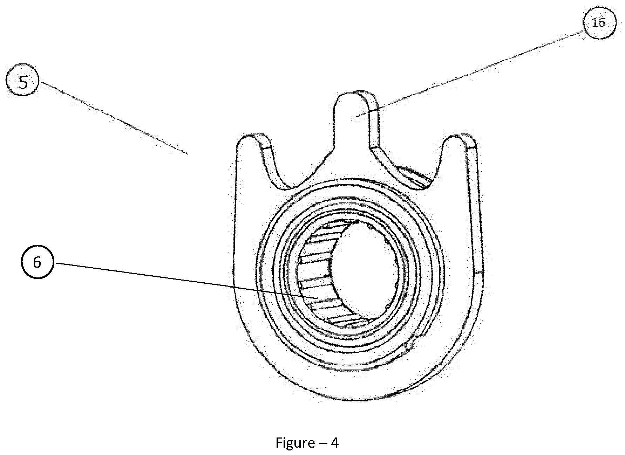

- **Figure 4** -: Perspective view of Short Body

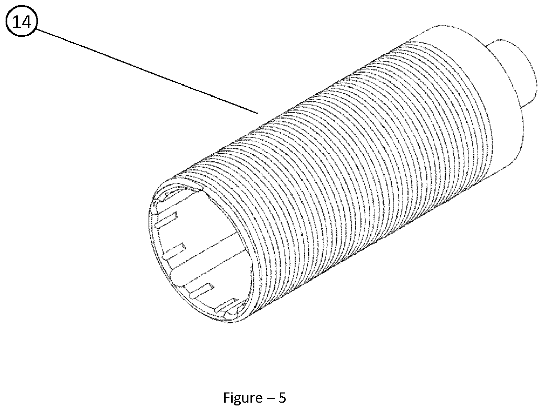

- **Figure 5** -: Perspective view of Brake Adjustment spindle

Parts constituting Brake Adjustment Mechanism disclosed under the invention are shown in figures with the numbers given below.
- **1-**: Set Spindle
- **2-**: Flange
- **3-**: Cover
- **5-**: Short Body
- **6-**: Pin ball bearing
- **7-**: Ball bearing housing
- **8-**: Fixed spring
- **9-**: Inner Body
- **10-**: Single ball
- **11-**: Long Body
- **12-**: Steel Press Spring
- **13-**: Eccentric Flap
- **14-**: Brake Adjustment Spindle
- **15-**: Brake Adjustment Mechanism
- **16-**: Short Body Clamps

Brake adjustment mechanism consists of following parts.

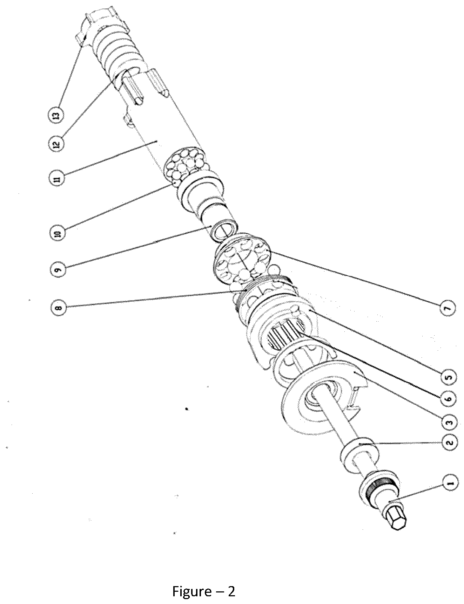

(Figure 2) Set spindle (1) of bracket structure providing manual adjustment is located at the very end in a manner it remains outside when brake adjustment mechanism is seated onto calliper. The part sitting onto calliper is cover (3) part. Flange (2) is placed to enable movement between set spindle (1) and cover (3) and sliding.

Inner part of short body (5) consists of pin ball bearings (6) which is one of main component of the invention providing one way rotation and locking movement in case of opposite movement. Outer part of short body (5) consists of fixed spring (8) surrounding body.

Short body (5) is placed on ball bearing (7) and single ball in order to enable easy movement to the side where short body (5) can move. Inner body (9) is located inside ball bearing housing (7) of short body (5) and partially long body (11) and transforms motion. Steel press spring (12) is placed inside long body (11).

Eccentric flaps (13) are located in the section in bottom inside adjustment spindle of long body (11).

Working principle of brake adjustment mechanism is as follows. Cover (3) part of the mechanism seated into brake adjustment spindle (14) in a manner set spindle (1) remains outside seats onto calliper. Eccentric flaps (13) located in lower part of brake adjustment mechanism seat into cavities inside the brake adjustment spindle (14) and thus any rotation movement provided in mechanism is transferred to brake adjustment spindle (14)

Brake adjustment spindle (14) is moved forward or backward by means of rotation of set spindle (1) around its axis, and positions of pads on other end are adjusted.

In case of wearing of pads, in turn, brake adjustment spindle (14) is moved forward in the distance corresponding to thickness of wearing. This motion is provided by means of rotation of short body clamps (16) on the short body (5) by rotating arm located inside calliper (during braking). Since pin ball bearings (6) located on inner surface of short body (5) do not allow rotation in this direction, short body (5) remains fixed and brake adjustment mechanism rotates as a whole.

In cases where there is no wearing, this rotation movement does not occur as there is no distance that brake adjustment spindle (14) may move while in case of wearing brake adjustment spindle (14) rotates around its axis in the distance corresponding to wearing.

After braking, brake adjustment spindle (14) current position should be protected and therefore rotation movement of rotating arm in opposite direction in calliper should be absorbed. Since opposite movement of rotating arm is in direction where pin ball bearings (6) on inner surface of short body (5) can rotate, pins make a free rotation movement and provides rotation of short body (5) independent from mechanism and thus brake adjustment spindle (14) and provides protection of brake adjustment spindle.

Where brake adjustment mechanism rotates as a whole, rotation movement transferred to short body (5) is transmitted to long body (11) where eccentric flaps (13) are by means of inner body (9). Single balls (10) are located in the joining point between inner body (9) and long body (13) in order to enable problem-free and high efficient transmission of motion under high pressure.

The rate of part used for uniform rotation of mechanism in the prior art is reduced to one to fourth and negative results arising from high number of part are prevented.

Also rotation of short body (5) on one single axis is provided by means of pin ball bearings (6) placed on inner wall, locking with inner body (9) developed in harmony with such bearings and rotation separate from mechanism is provided. Fixing members of clamp structure used for locking operation and conical clutching in prior art may get worn under high torque by time and need replacement every six months on average. Pin ball bearings (6) and inner body (9) solve wearing problem and thus life of brake adjustment mechanism is made longer and easy to use and cost advantage is provided.

## Claims

1. A brake adjustment mechanism (15) used for adjustment of the pre-use distance between brake pads and pressing onto brake disk during braking and thus converting kinetic energy into heat energy, providing slowing down and stop of the vehicle and automatically adjusting distance differences arising from wearing in the brake pads during the period of use, having cover (3) part seated into brake adjustment spindle (14) in a manner set spindle (1) remains outside seats onto calliper, eccentric flaps (13) located in lower part of said brake adjustment mechanism (15) seat into cavities inside the brake adjustment spindle (14) and thus any rotation movement provided in mechanism is transferred to brake adjustment spindle (14) **characterized by**; comprising
pin ball bearings (6) located on inner surface of short body (5) which do not allow rotation in as same direction as rotation direction of set spindle (1) around its axis and allow short body (5) remains fixed thus brake adjustment mechanism rotates as a whole during braking while allow rotation of short body (5) independent from mechanism thus brake adjustment spindle (14) and allow protection of position of brake adjustment spindle after braking.

## Patentansprüche

1. Ein Bremsnachstellmechanismus (15) zum Nachstellen des Abstands zwischen den Bremsbelägen vor dem Gebrauch und dem Anpressen auf die Bremsscheibe während des Bremsens und somit zum Umwandeln von kinetischer Energie in die Wärme, wodurch eine Verlangsamung und ein Anhalten des Fahrzeugs ermöglicht wird und Abstandsunterschiede, die durch den Verschleiß der Bremsbeläge während der Gebrauchsdauer entstehen, automatisch nachgestellt werden, mit einer Abdeckung (3), die teilweise in der Bremsnachstellspindel (14) so eingesetzt ist, dass die Spindel (1) außerhalb des Bremssattels sitzt, wobei im unteren Teil des Bremsnachstellmechanismus (15) angeordnete Exzenterklappen (13) in Hohlräumen innerhalb der Bremsnachstellspindel (14) sitzen und somit jede im Mechanismus vorgesehene Drehbewegung auf die Bremsnachstellspindel (14) übertragen wird, **dadurch gekennzeichnet**; bestehend aus
Stiftkugellagern (6) an der Innenfläche des kurzen Körpers (5), die keine Drehung in die gleiche Richtung wie die Drehrichtung der Einstellspindel (1) um ihre Achse zulassen und dafür sorgen, dass der kurze Körper (5) fixiert bleibt, sodass sich der Bremseneinstellmechanismus während des Bremsens als Ganzes dreht, während eine Drehung des kurzen Körpers (5) unabhängig vom Mechanismus und damit der Bremseneinstellspindel (14) möglich ist und die Position der Bremseneinstellspindel nach dem Bremsen geschützt wird.

## Revendications

1. Mécanisme de réglage des freins (15) utilisé pour régler la distance de pré-utilisation entre les plaquettes de frein et la pression exercée sur le disque de frein pendant le freinage, convertissant ainsi l'énergie cinétique en énergie thermique, permettant de ralentir et d'arrêter le véhicule et de régler automatiquement les différences de distance dues à l'usure des plaquettes de frein pendant la période d'utilisation, le couvercle (3) étant partiellement logé dans la tige de réglage des freins (14) de manière à ce que la tige de réglage (1) reste à l'extérieur des sièges sur l'étrier, les volets excentriques (13) situés dans la partie inférieure dudit mécanisme de réglage des freins (15) s'insèrent dans des cavités à l'intérieur de la tige de réglage des freins (14) et ainsi tout mouvement de rotation fourni dans le mécanisme est transféré à la tige de réglage des freins (14) **caractérisé par** ; comprenant
des roulements à billes (6) situés sur la surface intérieure du corps court (5) qui ne permettent pas une rotation dans le même sens que le sens de rotation de la tige de réglage (1) autour de son axe et qui permettent au corps court (5) de rester fixe, de sorte que le mécanisme de réglage des freins tourne dans son ensemble pendant le freinage, tout en permettant une rotation du corps court (5) indépendante du mécanisme, de sorte que la tige de réglage des freins (14) est protégée et que la position de la tige de réglage des freins est protégée après le freinage.
